# EUROPEAN PATENT SPECIFICATION

(11) **EP 2 366 279 B1**
(45) Date of publication and mention of the grant of the patent: **12.08.2020**
(21) Application number: 11158016.3
(22) Date of filing: 14.03.2011
(51) Int. Cl.: A01G 20/20

(54) **A precultivated lawn with a light structure and process for the production thereof**
Ein vorkultivierter Rasen mit einer leichten Struktur und Verfahren zu dessen Herstellung
Gazon pré cultivé avec une structure légère et procédé pour la production de celui-ci

(30) Priority: 15.03.2010 IT RM20100109
(43) Date of publication of application: 21.09.2011
(73) Proprietor: Bindi Pratopronto S.S., 04100 Latina (IT)
(72) Inventor: Bindi, Gianfranco, 04100 Latina (IT)
(74) Representative: Marcio', Paola

(56) References cited:
- EP-A1- 0 541 844
- DE-A1- 19 713 690
- GB-A- 1 532 650
- GB-A- 2 376 402
- US-A- 3 914 901
- US-A- 5 765 304

## Description

The present invention concerns the field of precultivated lawns used in flower-growing field for the restoration or the realization of green spaces from the beginning, like gardens, public gardens, sports grounds and similar works.

More in detail, the present invention concerns a process for the production of a precultivated lawn with a light structure.

It is known that natural lawns of the conventional kind are pre-cultivated with known agricultural techniques to the adult age of the superficial lawn layer and then processed with special machines for obtaining rolls or single turfs that may be moved to another place for the realization of grass surfaces for sports, ornamental, recreational or functional use.

It is also known that said products, comprising the growing substratum held by the roots of the superficial lawn layer, are heavy and encumbersome and necessarily produce an increase of storing and transport costs.

It is furthermore known that it is compulsory for the conventional lawns to consist of vegetal species compatible with the climate characteristics of the areas chosen for the laying, so as to prevent that extreme temperatures, or passing drought periods, alter the usual vital cycle of the superficial lawn layer, or cause an unsightly colour change.

Furthermore, said products prove to be inappropriate for the realization of temporary grass coverings as their removal implies the forced uprooting of the superficial lawn layer and consequently an irreparable damage to the roots thereof, which makes impossible a new laying in a new place.

From document US 5765304 A it is already know a precultivated lawn with a light structure, comprising a superficial lawn layer germinated in a thin growing multi-layers substratum, composed by peat moss and paper mulch, arranged over a layer of porous material, made out of non-woven polypropylene, laying on an impermeable membrane made out of polyvinyl.

Aim of the present invention is to solve the above-mentioned inconveniences.

The aim set forth is reached by means of a process for the production of said precultivated lawns with a light structure according to the main independent claim 1.

Further characteristics of the invention are contained in the dependent claim.

Due to the replacement of the natural growing substratum by a synthetic growing substratum, the lawn according to the present invention shows the following advantages:
- it determines the reduction of the total weight and of the encumbrance of the lawns, and consequently the reduction of the storing and transport costs;
- it determines the increase of the heat insulating action performed by the growing substratum onto the roots of the superficial lawn layer;
- it allows the realization of lawns consisting of vegetal species which might also be not completely compatible with the climate characteristics of the areas chosen for the laying;
- it allows the realization of removable lawns with a minimum damage of the roots of the superficial lawn layer.

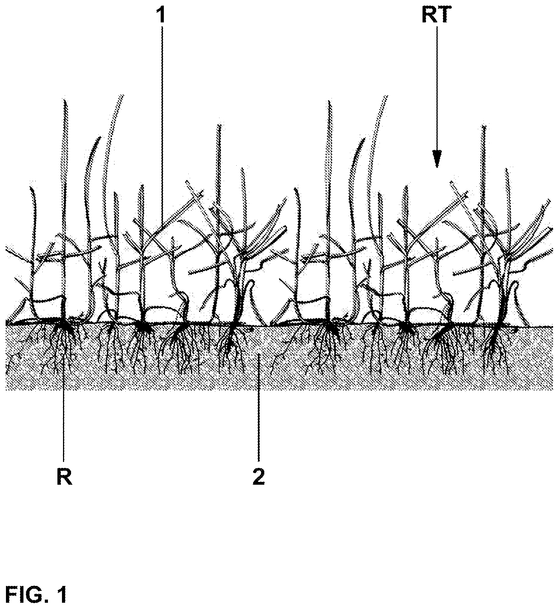

In the enclosed drawings, figure 1 shows a vertical section of a precultivated lawn with a light structure according to the present invention, mainly consisting of:
- a superficial lawn layer 1, of natural kind, consisting of vegetal species typical for a lawn, for grass coverings or for flower coverings, placed on a synthetic growing substratum, arranged for supporting the biologic functions thereof;
- a growing substratum 2 of synthetic kind, consisting of stringy residuals derived from the working of cloth materials like wool, cotton, silk, felt and other materials, compressed and mutually heat bonded without using resins, glues, solvents or similar substances.

The production process according to the present invention comprises:
- a ground preparing phase, for the preparation of an appropriate sowing bed, performed by means of agricultural techniques like plowing, digging over, milling and further improved by harrowing and packing down complementary thechniques;
- a phase of sowing or planting of vegetal species for lawn, grass coverings or flower coverings;
- a first phase of growing, for the growth of a uniform grass covering, performed by cultivation techniques of watering, fertilizing, cutting and other;
- a collecting phase of said grass covering in the form of lawn rolls RT or equivalent single turfs;
- a washing phase of the lawn rolls RT, or of the equivalent single turfs, arranged for removing the earthy material, forming the substratum of natural growing from the roots R of the surface lawn 1;
- an emplacement phase of the washed lawn rolls RT, or of the equivalent single turfs, onto a synthetic growing substratum 2, consisting of stringy residuals derived from the working of cloth materials like wool, cotton, silk, felt and other materials, compressed and mutually heat bonded without using resins, glues, solvents or similar substances;
- a second growing phase, for determining the taking root of the root apparatus R of the superficial lawn layer 1 of said washed lawn rolls RT, or of the equivalent single turfs, onto said synthetic growing substratum 2, performed by cultivation techniques of watering, fertilizing, cutting and other;
- a storing and/or transport phase of the finished product, and/or following emplacement of the same.

The process according to the present invention allows to produce lawns with a lighter structure and less encumbering than the lawns of conventional kind, usually comprising earthy material forming the natural growing substratum, and thus reducing the storing and transport costs thereof.

The lawns according to the present invention allow the realization of permanent or temporary grass coverings, onto a natural ground or onto different surfaces like asphalt, cement, rubber, wood or others, also under climate characteristics which are not completely compatible with the vegetal species forming the superficial lawn layer of the same.

This may be obtained due to the fact that, following to the taking root in the stringy structure of the synthetic growing substratum 2of the roots R of the vegetal species forming the superficial lawn layer 1, said roots are enclosed in an ambient which may perform a heat insulating effect on the same so as to preserve their vital cycle, without the need of a deep taking root in an appropriately prepared soil.

The limited taking root of said roots R on a natural soil as well allows the possible removal of said lawns with a moderate damage to the roots, and the re-placing of the same in another place.

The extreme lightness of said lawns allows to realize grass coverings on roofs, lofts and internal as well as external walls, of public and private buildings thus determining, in indirect way, a profitable increase of the heat insulation of said buildings due to the synthetic materials forming the growing substratum.

Furthermore, the stringy substance of the synthetic growing substratum 2 makes the watering thereof possible by means of well known techniques and systems, determining an optimal drainage of the water in excess, so as to avoid stagnation and therefore possible rottening of roots R of the superficial lawn layer 1, regardless of the surface chosen for the placing of the same.

## Claims

1. A process for the production of a precultivated lawn with a light structure, comprising:
- a ground preparing phase, for the preparation of an appropriate sowing bed;
- a phase of sowing or planting of vegetal species for lawn, grass coverings or flower coverings;
- a first phase of growing, for the growth of a uniform grass covering;
- a collecting phase of said grass covering in the form of lawn rolls (RT) or equivalent single turfs,
**characterized in that** the process comprises:
- a washing phase of the lawn rolls (RT), or of the equivalent single turfs, arranged for removing the earthy material, forming the substratum of natural growing, from the roots (R) of the surface lawn (1);
- an emplacement phase of the washed lawn rolls (RT), or of the equivalent single turfs, onto a synthetic growing substratum (2);
- a second growing phase, for determining the taking root of the root apparatus (R) of the washed lawn rolls (RT), or of the equivalent single turfs, onto said synthetic growing substratum (2);
- a storing and/or transport phase of the finished product and/or following emplacement of the same.

2. A process for the production of a precultivated lawn with light structure according to claim 1, **characterized in that** it comprises a selection phase of said synthetic growing substratum (2) among prepared supports comprising stringy residuals derived from the working of cloth materials like wool, cotton, silk, felt and other materials, compressed and mutually heat bonded without using resins, glues, solvents or similar substances.

## Patentansprüche

1. Ein Verfahren zur Herstellung eines vorkultivierten Rasens mit einer leichten Struktur, umfassend:
- eine Bodenvorbereitungsphase für die Vorbereitung eines geeigneten Saatbeets;
- eine Phase der Aussaat oder Bepflanzung von Pflanzenarten für Rasen, Gras- oder Blumenbedeckung;
- eine erste Wachstumsphase für das Wachstum einer einheitlichen Grasbedeckung;
- eine Sammelphase der besagten Grasbedeckung in Form von Rasenrollen (RT) oder gleichwertigen einzelnen Rasenstücken,
**dadurch gekennzeichnet, dass** das Verfahren Folgendes umfasst:
- eine Waschphase der Rasenrollen (RT) oder der gleichwertigen einzelnen Rasenstücke, eingerichtet zum Entfernen des erdigen Materials, das das Substrat des natürlichen Wachstums von den Wurzeln (R) des Oberflächenrasens (1) bildet;
- eine Platzierungsphase der gewaschenen Rasenrollen (RT) oder der gleichwertigen einzelnen Rasenstücke auf ein synthetisches Wachstumssubstrat (2);
- eine zweite Wachstumsphase zur Feststellung der Verwurzelung des Wurzelapparates (R) der gewaschenen Rasenrollen (RT) oder der gleichwertigen einzelnen Rasenstücke auf dem synthetischen Wachstumssubstrat (2);
- eine Lagerungs- und/oder Transportphase des Endprodukts und/oder eine darauffolgende Platzierung desselben.

2. Ein Verfahren zur Herstellung eines vorkultivierten Rasens mit leichter Struktur gemäß Anspruch 1, **dadurch gekennzeichnet, dass** es eine Auswahlphase des synthetischen Wachstumssubstrats (2) zwischen vorbereiteten Trägern umfasst, die faserige Rückstände umfassen, stammend von der Bearbeitung von Stoffmaterialien wie Wolle, Baumwolle, Seide, Filz und anderen Materialien, die ohne Verwendung von Harzen, Klebstoffen, Lösungsmitteln oder ähnlichen Substanzen komprimiert und gegenseitig wärmegebunden sind.

## Revendications

1. Procédé pour la production d'un gazon pré-cultivé avec une structure légère, comprenant :
- une phase de préparation du sol, pour la préparation d'un lit de semis approprié ;
- une phase d'ensemencement ou de plantation d'espèces végétales pour le gazon, les couvertures herbeuses ou les couvertures de fleurs ;
- une première phase de croissance, pour l'obtention d'une couverture herbeuse uniforme ;
- une phase de collecte de ladite couverture herbeuse sous la forme de rouleaux de gazon (RT) ou de gazons individuels équivalents ;
**caractérisé par le fait que** le procédé comprend :
- une phase de lavage des rouleaux de gazon (RT), ou des gazons individuels équivalents, agencés pour enlever la matière terreuse, formant le substrat de croissance naturelle, des racines (R) du gazon de surface (1) ;
- une phase de mise en place des rouleaux de gazon (RT) lavés, ou de gazons individuels équivalents, sur un substrat de croissance synthétique (2) ;
- une deuxième phase de croissance, pour déterminer l'enracinement de l'appareil racinaire (R) des rouleaux de gazon (RT) lavés, ou des gazons individuels équivalents, sur ledit substrat de croissance synthétique (2) ;
- une phase de stockage et/ou de transport du produit fini et/ou la mise en place suivante de celui-ci.

2. Procédé pour la production d'un gazon pré-cultivé à structure légère selon la revendication 1, **caractérisé par le fait qu'**il comprend une phase de sélection dudit substrat de croissance synthétique (2) parmi des supports préparés comprenant des résidus filandreux dérivés du travail de matériaux vestimentaires comme la laine, le coton, la soie, le feutre et d'autres matériaux, comprimés et mutuellement liés par la chaleur sans utiliser de résines, de colles, de solvants ou de substances similaires.
